# EUROPÄISCHE PATENTSCHRIFT

(11) **EP 1 281 485 B1**
(45) Veröffentlichungstag und Bekanntmachung des Hinweises auf die Patenterteilung: **02.06.2010**
(21) Anmeldenummer: 02405622.8
(22) Anmeldetag: 19.07.2002
(51) Int. Cl.: B25D 17/26, B25D 16/00, B23Q 11/10, B23Q 11/00, B25F 5/00, H02K 11/04

(54) **Schlagendes Elektrohandwerkzeuggerät**
Portable Electrically Driven Percussive Tool
Outil à main électrique à percussion

(30) Priorität: 30.07.2001 DE 10137159
(43) Veröffentlichungstag der Anmeldung: 05.02.2003
(73) Patentinhaber: HILTI Aktiengesellschaft, 9494 Schaan (LI)
(72) Erfinder: Richter Martin, 85354 Freising (DE); Artmann, Konrad, 86938 Schondorf (DE); Bongers-Ambrosius, Hans-Werner, 81477 München (DE)
(74) Vertreter: Wildi, Roland

(56) Entgegenhaltungen:
- EP-A- 0 083 326
- EP-A- 0 104 154
- EP-A- 0 107 628
- EP-A- 0 107 629
- EP-A- 0 992 320
- DE-A- 3 417 228
- DE-A- 3 420 393
- DE-A- 19 532 976
- DE-A- 19 626 213
- US-A- 3 335 324
- US-A- 6 123 158
- US-A1- 2002 007 956
- PATENT ABSTRACTS OF JAPAN vol. 1997, no. 10, 31. Oktober 1997 (1997-10-31) -& JP 09 155765 A (DAIKO SEIMITSU KK;OSAKA GAS CO LTD), 17. Juni 1997 (1997-06-17)

## Beschreibung

Die Erfindung bezeichnet ein zumindest teilweise drehendes und schlagendes Elektrowerkzeuggerät, wie einen Bohrhammer oder Bohrmeissel, insbesondere für den Bergbau.

Schwere, vor Ort punktuell unterstützte, Bohrhämmer mit einer Masse über 10 kg, wie sie üblicherweise im Untertagebergbau zum Antrieb für Bohrwerkzeuge mit langen Bohrstangen und Bohrköpfen von 20 mm bis 50 mm Durchmesser zum Einbringen von Sprenglöchern verwendet werden, sind üblicherweise pneumatisch angetrieben, um eine Explosionsgefahr durch elektrische Funken auszuschliessen.

Nach der EP107628 und der EP107629 weist ein modular aufgebauter Bohrhammer mit einem pneumatischen Schlagwerk einen bürstenlosen, über einen Wechselrichter elektronisch kommutierten, Elektromotor auf. Elektromotor, Schlagwerk und Wechselrichter sind luftgekühlt. Nach der EP107628 ist der Wechselrichter über eine Zwischenwandung in einem abgeteilten Elektronikgehäuse angeordnet und mit der Zwischenwandung wärmeleitend verbunden. Die bei Luftkühlung auftretenden lokalen Temperaturen überschreiten üblicherweise die im Bergbau beachtliche Zündtemperatur.

Nach der DE4330520 weist ein Bohrgerät mit einem bürstenlosen Elektromotor eine Wasserkühlung für diesen auf, welche sich zur Werkzeugkühlung hin fortsetzt.

Nach der DE3417228 wird ein elektrisch kommutierter Elektromotor mit schlagwettergeschützter Unterbringung von Schalt- und Steuerorganen zum Kraftantrieb im Untertagebergbau eingesetzt.

Nach der DE19546023 weist ein druckfest gekapselter, explosionsgeschützte Elektromotor zum Einsatz in Gegenwart brennbarer Medien entlang der Rotorwelle einen Explosionschutzspalt und ein modular aufgebautes Motorgehäuse mit einer über eine Zwischenwand abgetrennten, druckfest umschlossenen Anschlusskammer für die Stromzuführung auf.

Nach der DE3420393 weist ein druckfest gekapselter, explosionsgeschützter Elektromotor zum Einsatz im Untertagebergbau in einer Doppelwandung um den Stator angeordnete Kühlmittelkanäle für Kühlwasser auf.

Die Aufgabe der Erfindung besteht in der Realisierung eines leistungsstarken portablen, zumindest teilweise drehenden und schlagenden Elektrowerkzeuggerätes für den Untertagebergbau.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein zumindest teilweise drehendes und schlagendes Elektrowerkzeuggerät zum Antrieb eines Werkzeuges in einem schlagwetergeschützten Gehäuse einen von einer Steuerelektronik über einen Wechselrichte elektronisch kommutierten Elektromotor auf, wobei vom Gehäusevolumen über zumindest eine innenliegende Zwischenwandung ein Elektronikgehäusemodul abgeteilt und mit dem Wechselrichter wärmeleitend verbunden ist. Das Werkzeug ist flüssigkeitsgespült und die Zwischenwandung weist eine Kühlmittelleitung auf, welche durch ein flüssiges Kühlmittel kühlbar ist und mit einer Werkzeugaufnahme für das flüssigkeitsgespülte Werkzeug verbunden ist.

Die bei einem leistungsstarken portablen Elektrowerkzeuggerät mit einem elektronisch kommutierten Elektromotor im Wechselrichter elektronikgehäusemodulseitig entstehenden elektrischen Verluste, welche zu lokalen Temperaturen über 130°C im Inneren des schlagwettergeschützten Gehäuses führen können, sind über die Kühlmittelleitungen der innenliegenden Zwischenwandung direkt abführbar, ohne dass die Gehäuseaussenseite über 110°C erwärmbar ist. Dadurch, dass das Werkzeug flüssigkeitsgespült ist und die Kühlmittelleitung mit der Werkzeugaufnahme für das flüssigkeitsgespüte Werkzeug verbunden ist, ist das flüssige Kühlmittel direkt in das Werkzeug und innerhalb dessen weiter zur Bearbeitungsstelle transportierbar.

Vorteilhaft weist das, den Wechselrichter im Laststromkreis versorgende, Stromversorgungskabel zumindest eine, mit der Steuerelektronik verbundene Schutzleitung für einen zusätzlichen üblichen Schutzstromkreis zum vorzeitigen Trennen des Laststromkreises auf, wodurch bei einer mechanischen Unterbrechung des Stromversorgungskabels der Laststromkreis vor einer möglichen Abrissfunkenbildung elektrisch unterbrechbar ist.

Vorteilhaft ist die Steuerelektronik mit einem kontaktlosen Motorschalter, insb. Hall-Schalter, verbunden, welcher über einen von aussen schwenkbaren Schalthebel betätigbar ist.

Vorteilhaft ist der kontaktlose Motorschalter über zwei voneinander unabhängig schwenkbare Schalthebel, welche nebeneinander zugeordnet sowie durch einen zwischenliegenden Eingriffsschutz getrennt sind, welcher sich in der Schwenkebene im Schwenkbereich erstreckt, ausschliesslich kombiniert betätigbar, wodurch eine Betätigung nur mit zwei Fingern möglich und somit eine unbeabsichtigte Betätigung, bspw. mit einem stumpfen Gegenstand, ausgeschlossen ist.

Die Erfindung wird bezüglich eines vorteilhaften Ausführungsbeispiels näher erläutert mit einer Darstellung als Elektrowerkzeuggerät.

Nach der Darstellung weist ein drehendes und schlagendes Elektrowerkzeuggerät 1 zum Antrieb eines aufgenommenen, nur teilweise dargestellten, wassergespülten Werkzeuges 2 in einem schlagwettergeschützten, in der Darstellung teilweise geöffneten, Gehäuse 3 einen von einer Steuerelektronik 4 über einen Wechselrichter 5 elektronisch kommutierten Elektromotor 6 auf, wobei vom Gehäusevolumen über zumindest eine innenliegende Zwischenwandung 7, die über Kühlmittelleitungen 8 durch Wasser kühlbar ist, ein Elektronikgehäusemodul 9 abgeteilt und mit dem an der Zwischenwandung 7 befestigten Wechselrichter 5 wärmeleitend verbunden ist. Die Kühlmittelleitung 8 ist mit einer Werkzeugaufnahme 10 für das wassergespülte Werkzeug 2 verbunden. Die Steuerelektronik 4 ist mit einem als Hall-Schalter ausgeführten kontaktlosen Motorschalter 11 verbunden, welcher über eine in das Elektronikgehäusemodul 9 eingreifende Welle über zwei voneinander unabhängig schwenkbare sowie über einen dazwischenliegenden Eingriffsschutz 12 getrennte Schalthebel 13a, 13b betätigbar ist. Der Laststromkreis zum Wechselrichter 5 ist mit zwei Leitungen 14a, 14b über den kontaktlosen Motorschalter 11 elektrisch unterbrechbar leitend verbunden. In das Elektronikgehäusemodul 9 führt ein Stromversorgungskabel 15, welches neben den zwei Leitungen 14a, 14b für den Laststromkreis eine mit der Steuerelektronik 4 verbundene Schutzleitung 16 beinhaltet.

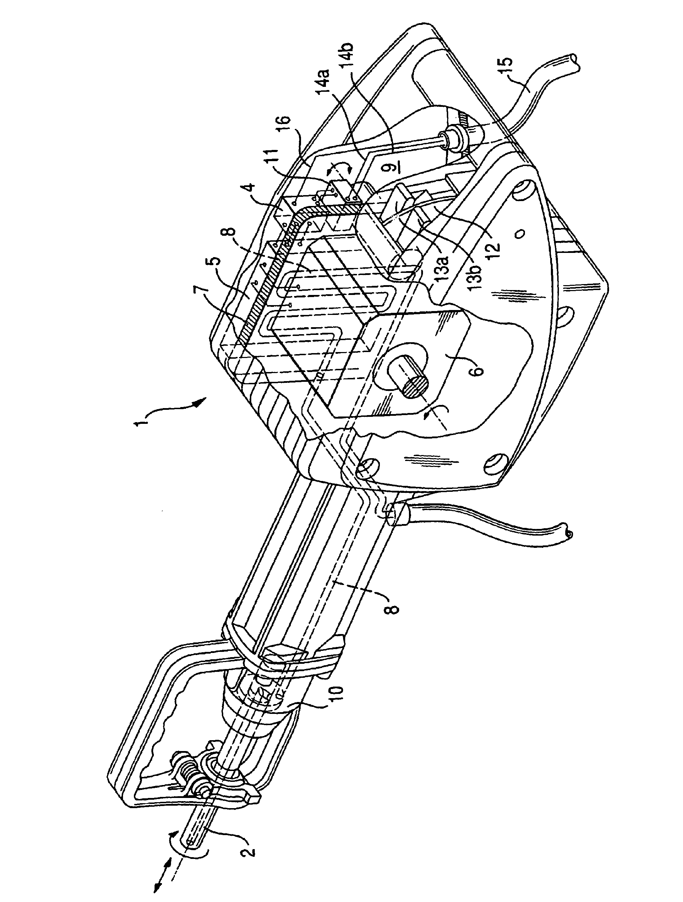

## Patentansprüche

1. Elektrowerkzeuggerät zum teilweise drehenden und schlagenden Antrieb eines Werkzeuges (2) mit einem von einer Steuerelektronik (4) über einen Wechselrichter (5) elektronisch kommutierten Elektromotor (6) innerhalb eines schlagwetiergeschützten Gehäuses (3), wobei vom Gehäusevolumen über zumindest eine innenliegende Zwischenwandung (7) ein Elektronikgehäusemodul (9) mit dem Wechselrichter (5) abgeteilt ist und die Zwischenwandung (7) mit dem Wechselrichter (5) wärmeleitend verbunden ist, **dadurch gekennzeichnet, dass** das Werkzeug flüssigkeitsgespült ausgebildet ist und die Zwischenwandung (7) eine Kühlmittelleitung (8) aufweist, welche durch ein flüssiges Kühlmittel kühlbar und mit einer Werkzeugaufnahme (10) für das flüssigkeitsgespülte Werkzeug (2) verbunden ist.

2. Elektrowerkzeuggerät nach Anspruch 1, **dadurch gekennzeichnet, dass** ein, den Wechselrichter (5) im Laststromkreis versorgendes Stromversorgungskabel (15) über eine Schutzleitung (16) mit der Steuerelektronik (4) verbunden ist.

3. Elektrowerkzeuggerät nach einem der vorherigen Ansprüche, **dadurch gekennzeichnet, dass** die Steuerelektronik (4) mit einem kontaktlosen Motorschalter (11) verbunden ist, welcher von aussen betätigbar ist.

4. Elektrowerkzeuggerät nach Anspruch 3, **dadurch gekennzeichnet, dass** der kontaktlose Motorschalter (11) mit zwei voneinander unabhängig schwenkbaren Schalthebeln (13a, 13b), welche nebeneinander zugeordnet sowie durch einen zwischenliegenden Bingriffsschutz (12) getrennt sind, verbunden sowie ausschliesslich kombiniert betätigbar ist.

## Claims

1. Electric power tool for driving a work tool (2), partly by rotation and partly percussively, having an electric motor (6) electronically commutated by control electronics (4) via an inverter (5) within a firedamp proof housing (3), wherein an electronic housing module having the inverter (5) is divided off from the volume of the housing by at least one interior partition (7), and the interior partition (7) is heat conductively connected with the inverter (5), **characterised in that** the work tool is a liquid cooled work tool and the interior partition (7) has a cooling medium conduit (8) which can be cooled by a liquid cooling medium and is connected with a work tool reception (10) for the liquid cooled work tool (2).

2. Electric power tool according to claim 1, **characterised in that** a current supply cable (15) that supplies the inverter (5) in the load current circuit, is connected by a protective conductor (16) with the control electronics (4).

3. Electric power tool according to one of the preceding claims, **characterised in that** the control electronics (4) is connected with a contactless motor switch (11) which can be actuated from the outside.

4. Electric power tool according to claim 3, **characterised in that** the contactless motor switch (11) can be actuated by two switch levers (13a, 13b) only when acted upon in combination which can be swivelled independently of each other and which are arranged next to each other and which are separated by an engagement shield (12) disposed between them.

## Revendications

1. Appareil électrique pour l'entraînement partiellement rotatif et percutant d'un outil (2), comprenant, à l'intérieur d'un carter antigrisou (3), un moteur électrique (6) commuté électroniquement par une électronique de commande (4) par l'intermédiaire d'un onduleur (5), un module de boîtier électronique (9) comportant l'onduleur (5) étant séparé du volume du carter par au moins une cloison intérieure (7), et la cloison (7) étant reliée de manière thermoconductrice à l'onduleur (5), **caractérisé en ce que** l'outil est conçu pour être rincé par un liquide, et la cloison (7) comporte une conduite d'agent de refroidissement (8) qui peut être refroidie par un agent de refroidissement liquide et est reliée à un raccord d'outil (10) pour l'outil (2) rincé par un liquide.

2. Appareil électrique selon la revendication 1, **caractérisé en ce qu'**un câble d'alimentation en courant (15) alimentant l'onduleur (5) disposé sur le circuit de courant de charge est connecté à l'électronique de commande (4) par une ligne de protection (16).

3. Appareil électrique selon une des revendications précédentes, **caractérisé en ce que** l'électronique de commande (4) est connectée à un commutateur de moteur sans contact (11), lequel peut être actionné de l'extérieur.

4. Appareil électrique selon la revendication 3, **caractérisé en ce que** le commutateur de moteur sans contact (11) est relié à deux leviers de commutation (13a, 13b), lesquels sont aptes à pivoter indépendamment l'un de l'autre et sont séparés par un moyen anti-actionnement (12) disposé entre elles, et ne peut être actionné que de manière combinée.
